# DEMANDE DE BREVET EUROPEEN

(11) **EP 4 678 543 A2**
(43) Date de publication de la demande: **14.01.2026**
(21) Numéro de dépôt: 25188426.8
(22) Date de dépôt: 09.07.2025
(51) Int. Cl.: B65B 57/04, B07C 5/342, B65G 47/31, A23G 1/54, B65B 25/00

(54) **DISPOSITIF ET MÉTHODE DE DÉTECTION DE DÉFAUTS DANS L'EMBALLAGE DE PRODUITS CHOCOLATÉS**

(30) Priorité: 09.07.2024 BE 202405441
(71) Demandeur: Libeert, 7780 Comines (BE)
(72) Inventeur: LIBEERT, Georges, 7780 COMINES (BE)
(74) Mandataire: Brantsandpatents bv

(57) **Abrégé**

L'invention se rapporte à une méthode et à un dispositif de détection de défauts dans l'emballage des produits chocolatés. La méthode comprend des étapes telles que la fabrication et le démoulage des produits chocolatés, l'emballage, le scannage de la face inférieure à l'aide d'une caméra et la séparation des produits correctement et incorrectement emballés. Le dispositif se compose d'une pluralité de convoyeurs, d'un capteur de distance, d'un contrôleur de vitesse, d'une caméra, d'un dispositif de levage et d'un dispositif d'éjection. Le scannage garantit un contrôle de qualité cohérent et évite les défauts d'emballage.

## Description

### DOMAINE TECHNIQUE

L'invention se rapporte à la détection de défauts dans des produits chocolatés emballés. Plus précisément, l'invention se rapporte à une méthode et un dispositif permettant de scanner des produits chocolatés emballés.

### ETAT DE LA TECHNIQUE

Les lignes actuelles d'impression et de finition des emballages de produits chocolatés combinent différents modèles d'emballages pour accroître l'efficacité, mais cela comporte des risques, tels que l'interversion accidentelle des modèles d'emballages pendant le tri et les défauts lors de la préparation de l'impression. Ces risques sont encore aggravés par la nécessité de disposer de versions d'emballage différentes pour les marchés internationaux en raison des diverses exigences réglementaires. Cette complexité conduit souvent à des défauts qui non seulement affectent la qualité du produit, mais peuvent également causer des dommages financiers et de réputation importants en raison de rappels et de produits bloqués.

Des produits chocolatés mal emballés peuvent entraîner des conséquences négatives importantes tant pour le producteur que pour le détaillant. L'un des principaux problèmes est la possibilité de rappels. S'il s'avère que l'emballage contient des informations incorrectes, telles que des listes d'ingrédients ou des informations d'allergènes erronées, cela peut entraîner de graves risques pour la santé des consommateurs. Cela oblige les entreprises à procéder à des rappels importants et coûteux, exigeant que tous les produits soient retirés des rayons et des entrepôts et détruits ou revérifiés. En plus, des produits chocolatés mal emballés portent atteinte à la réputation du producteur et du détaillant. Les consommateurs perdent confiance dans les marques s'ils reçoivent des informations non fiables parce que le produit est mal étiqueté. Cela peut entraîner une publicité négative et une baisse des ventes, puisque les consommateurs cherchant des alternatives plus fiables. Surtout dans le cas de produits haut de gamme ou de qualité, les atteintes à la réputation peuvent être particulièrement préjudiciables, car ces marques dépendent fortement de leur image et de la confiance des clients. La manipulation de produits chocolatés mal emballés et les dommages causés à l'image entraînent des conséquences financières importantes. Outre les coûts directs liés au rappel et au remplacement des produits, les entreprises doivent souvent payer des dommages et intérêts aux consommateurs et aux détaillants. Il peut également y avoir des conséquences juridiques lorsque les consommateurs intentent une action en justice en raison de problèmes de santé causés par les informations incorrectes sur l'emballage. Tous ces facteurs peuvent entraîner une charge financière importante pour l'entreprise, notamment une perte de parts de marché et une réduction des marges bénéficiaires.

Les techniques traditionnelles de détection de défauts d'emballage des produits chocolatés sont limitées et inefficaces. Beaucoup de systèmes utilisent des caméras installées entre les convoyeurs pour vérifier si les emballages sont corrects. Cette méthode nécessite plusieurs flux de production pour contrôler tous les produits, ralentissant considérablement le processus et se traduisant par une longueur irréaliste du convoyeur. En outre, des contrôles humains sont souvent nécessaires pour étalonner et vérifier régulièrement les systèmes, ce qui entraîne une baisse de la productivité et une augmentation des coûts. Une autre technique de détection traditionnelle est le contrôle sélectif consistant à prélever au hasard certains produits sur la chaîne de production. Cette méthode ne permet pas d'éviter tous les défauts parce que seul un nombre limité de produits est contrôlé. En plus, le contrôle des produits individuels prend beaucoup de temps car ils doivent être retirés du processus.

Pour les produits autres que les produits chocolatés, la littérature décrit diverses techniques de contrôle de qualité.

Le document US20230065811 décrit une méthode de contrôle de la qualité d'emballages de lentilles de contact scellés. Cette méthode consiste à positionner un emballage de lentilles de contact scellé dans une boîte à lumière, à éclairer l'emballage dans la boîte à lumière à l'aide d'une source lumineuse, à enregistrer des données d'image de l'emballage éclairé dans la boîte à lumière, à analyser, à base d'un ou de plusieurs modèles de contrôle de qualité, les données d'image de l'emballage éclairé dans la boîte à lumière, et à accepter ou à rejeter les emballages de lentilles de contact à base de cette analyse. Un emballage est alors positionné dans la boîte à lumière à l'aide d'un dispositif de préhension rotatif, ralentissant le contrôle séquentiel des emballages.

Le document FR1393819 se rapporte à une machine à emballer les tablettes de chocolat et plus particulièrement une installation entièrement automatique permettant d'emballer les tablettes, barres ou plaques de chocolat sortant d'un dispositif. de moulage ou d'une installation réfrigérante, d'abord individuellement, et ensuite en paquets ou dans des cartons, sans intervention d'un opérateur. Les machines d'emballage connues jusqu'ici n'offrent pas cette possibilité; dans celles-ci, les tablettes non encore enveloppées sont empilées et ensuite seulement la machine les enveloppe avec le matériau d'emballage. Ces machines délivrent alors une à une les tablettes emballées et il faut un opérateur a la sortie de la machine pour les contrôler pièce par pièce, c'est-là-dire pour vérifier si l'emballage est correct et éliminer les tablettes mal emballées. Ensuite, les tablettes emballées sont comptées par le personnel adéquat, divisées en lots comportant plusieurs tablettes et emballées à la main dans des cartons. toute cette série d'op6ratiosn exige un nombreux personnel, prend beaucoup de temps et est par conséquent onéreux.

Le document US6130438 décrit un appareil d'inspection de défauts du papier d'emballage pour une machine de fabrication de cigarettes, permettant une détection simple et fiable d'un défaut, tel qu'un trou, dans un papier d'emballage allongé transporté de manière continue à grande vitesse, et adapté pour rejeter sans erreur les cigarettes qui sont formées en utilisant une partie défectueuse du papier d'emballage. Des capteurs optiques sont placés le long d'un convoyeur du papier d'emballage pour détecter la transmission de la lumière émise sur une zone du papier d'emballage et un défaut dans le papier d'emballage, tel qu'un trou, est détecté en fonction de la réception ou non de la lumière par les capteurs optiques. Le résultat de la détection des défauts est synchronisé avec le moment où le tabac coupé est emballé dans le papier d'emballage afin de rejeter les cigarettes défectueuses.

Le document US5515159 décrit une inspection en ligne de scellés d'emballages flexibles et semi-rigides opaques, translucides et transparents scellés par élastomère. Dans le cas de scellés opaques très réfléchissants de différents élastomères et couleurs, un éclairage à faible angle d'incidence et une lumière latérale structurée sont utilisés pour localiser et définir le scellé et pour mettre en évidence les défauts à l'intérieur de la zone scellée. Pour les scellés transparents, c'est-à-dire très translucides, non seulement un éclairage à faible angle et une lumière latérale structurée sont utilisés pour définir la zone du scellé, mais aussi un rétro-éclairage de l'emballage et du scellé pour ensuite localiser et classifier les défauts à l'intérieur des limites du scellé. Plusieurs images vidéo de parties de la zone contenant le scellé et de parties du couvercle restant sont générées par des caméras de type CCD en réponse à un ou plusieurs capteurs détectant la présence et le positionnement correct de l'emballage se déplaçant le long d'un convoyeur pour l'acquisition d'images.

Aucune de ces techniques n'est adaptée à la détection en ligne des produits chocolatés mal emballés, car le chocolat est un produit fragile transporté en ligne à grande vitesse. Cette fragilité est due à la fragilité du chocolat et à la présence de reliefs, tels que des rainures de rupture, qui font que le produit chocolaté se casse facilement à la moindre manipulation dans la chaîne de production. En outre, les possibilités de manipulation ou de réorientation des produits chocolatés sont encore limitées par le fait que les produits chocolatés ne peuvent pas être transportés sur la face gaufrée, car ils seraient instables pendant le transport, augmentant encore le risque de rupture. Cette limitation des possibilités de manipulation des produits chocolatés dans la chaîne de production rend très difficile la détection en ligne es défauts des produits chocolatés emballés.

### RESUME DE L'INVENTION

Dans un premier aspect, l'invention se rapporte à une méthode de détection de défauts dans l'emballage des produits chocolatés. La méthode comprend les étapes de la fabrication d'un produit chocolaté dans un moule, du démoulage du produit chocolaté fabriqué, de l'emballage du produit chocolaté, du scannage de la face inférieure du produit chocolaté emballé à l'aide d'une ou de plusieurs caméras, et de la séparation des produits chocolatés correctement emballés et incorrectement emballés sur la base du scannage. Les produits chocolatés correctement emballés sont ensuite livrés à l'emballage final. Les produits chocolatés emballés sont acheminés successivement vers et au-delà d'un endroit où la face inférieure est scannée et un endroit où les produits chocolatés correctement emballés et ceux qui ne le sont pas sont séparés.

Dans un deuxième aspect, l'invention se rapporte à un dispositif comprenant un dispositif de transport ayant plusieurs convoyeurs, un capteur de distance pour mesurer la distance entre les produits chocolatés emballés successifs, un régulateur de vitesse pour ajuster la vitesse d'alimentation en fonction de cette distance, une ou plusieurs caméras pour scanner la face inférieure, un ou plusieurs convoyeurs sous vide pour soulever et transporter les produits chocolatés emballés au-dessus de la ou des caméras, et un dispositif d'éjection pour retirer des produits chocolatés emballés sélectionnés.

Le scannage de la face inférieure des produits chocolatés garantit un contrôle de qualité cohérent, empêchant que des produits chocolatés mal emballés ne finissent chez les consommateurs. Les informations les plus importantes à vérifier, telles que l'impression sur l'emballage et la manière dont le produit est emballé, se trouvent sur la face inférieure du produit chocolaté emballé. En raison de la fragilité du chocolat, les produits chocolatés sont fragiles et peuvent se briser s'ils sont retournés. Le risque est d'autant plus grand que la chaîne de production se déplace à grande vitesse. A l'aide d'un dispositif de levage, tel qu'un convoyeur sous vide, les produits chocolatés sont soulevés au-dessus d'une ou de plusieurs caméras, permettant de scanner la face inférieure et de déterminer si le produit est emballé de manière correcte. Ce dispositif offre une méthode de détection de produits mal emballés adaptée aux produits chocolatés et aux chaînes de production à grande vitesse.

### DESCRIPTION DES FIGURES

Les figures sont des exemples non-limitatifs illustrant l'invention, et ne sont pas destinés à limiter ou ne peuvent pas être interprétés comme limitant l'étendue de l'invention.
***FIG. 1*** *est une illustration schématique d'une vue de dessus de l'emballage d'une barre de chocolat.*

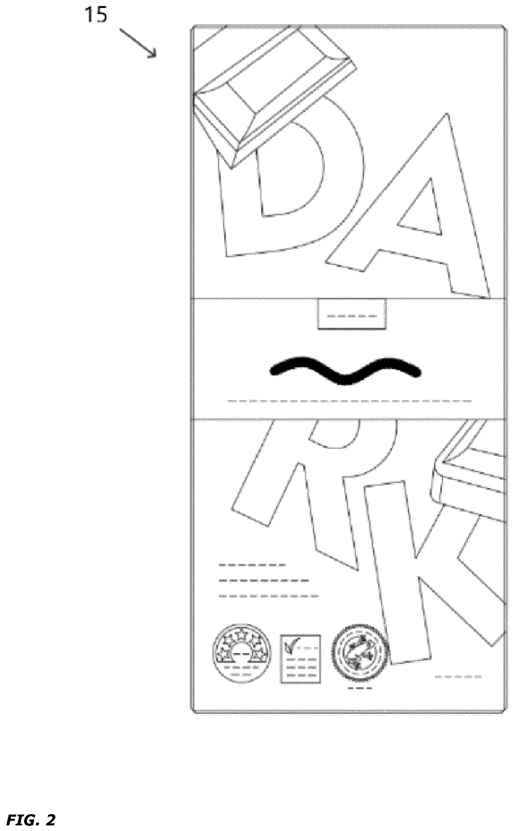

***FIG. 2*** *est une illustration schématique d'une vue de la face supérieure d'une barre de chocolat emballée.*
***FIG. 3*** *est une illustration schématique d'une vue de la face inférieure d'une barre de chocolat emballée.*
***FIG. 4*** *est une illustration schématique d'une vue de dessus du dispositif de détection de défauts dans les produits chocolatés emballés.*
***FIG. 5*** *est une illustration schématique d'une vue latérale du dispositif de détection de défauts dans les produits chocolatés emballés.*

### DESCRIPTION DETAILLEE

L'invention se rapporte à une méthode et à un dispositif de détection de défauts dans l'emballage des produits chocolatés.

Sauf mention contraire, tous les termes utilisés dans la description de l'invention, y compris des termes techniques et scientifiques, sont utilisés dans le sens comme compris généralement par le spécialiste dans le domaine technique de l'invention. Pour un meilleur jugement de la description de l'invention, les termes suivants sont expliqués explicitement.

L'expression "alimentation successive" désigne l'alimentation continue et séquentielle de produits chocolatés à un endroit particulier dans un processus de production sans interruptions. Il peut s'agir par exemple d'une chaîne de production composée de plusieurs convoyeurs successifs.

Le "démoulage" désigne le processus consistant à retirer du moule un produit chocolaté fabriqué après qu'il a pris la forme souhaitée.

"Relief" désigne l'émergence d'un motif au-dessus (ou au-dessous) d'une surface plane, comme les rainures de rupture dans une barre de chocolat.

"Caméra" désigne un appareil convertissant un signal lumineux incident en un schéma chimique ou un signal électronique.

"Des produits chocolatés mal emballés" désigne des produits chocolatés emballés de manière défectueuse. Ces défauts peuvent varier d'erreurs dans les codes à barres, les dates de péremption, les numéros de produits, les dimensions, le poids indiqué et les ingrédients, à la feuille visible de l'emballage intérieur, des coins pliés au niveau de la fermeture de l'emballage, des rides, des déchirures, des fermetures tordues ou des pièces déformées.

"Principalement plat" désigne une surface généralement lisse et régulière, mais qui peut présenter quelques imperfections mineures. Cela signifie que, bien que la surface soit principalement plate et régulière, il peut y avoir de petites saillies ou irrégularités, telles que des noix, des raisins secs ou d'autres ajouts dépassant la surface.

Les termes "comprendre", "comprenant", "composer de", "composé de", "prévu de", "comporter", "comportant", "contenir", "contenant" sont des synonymes et sont des termes inclusifs ou ouverts indiquant la présence de ce qui suit, et ne pas excluant ou empêchant d'autre composants, caractéristiques, éléments, membres, phases, connus de ou décrits dans l'état de la technique.

Dans un premier aspect, l'invention se rapporte à une méthode de détection en ligne de défauts dans l'emballage de produits chocolatés, comprenant les étapes de la fabrication d'un produit chocolaté dans un moule; le démoulage du produit chocolaté fabriqué; l'emballage du produit chocolaté fabriqué, l'emballage comprenant une face supérieure et une face inférieure, la face supérieure comprenant de préférence une surface gaufrée et la face inférieure étant principalement plate; le scannage en ligne de la face inférieure du produit chocolaté emballé à l'aide d'une caméra; la séparation en ligne des produits chocolatés correctement emballés et des produits chocolatés incorrectement emballés, les produits chocolatés correctement emballés et les produits chocolatés incorrectement emballés étant identifiés sur la base du scannage de la face inférieure du produit chocolaté emballé; la livraison des produits chocolatés correctement emballés à un emballage final; l'alimentation successif des produits chocolatés emballés sur un convoyeur, jusqu'à, et au-delà d'un endroit où la face inférieure des produits chocolatés emballés est scannée et d'un endroit où les produits chocolatés correctement emballés et les produits chocolatés incorrectement emballés sont séparés.

En scannant la face inférieure de tous les produits chocolatés, les défauts de l'emballage peuvent être détectés, permettant de retirer de la chaîne de production les produits chocolatés mal emballés afin d'éviter qu'ils ne finissent dans le magasin. Dans un mode de réalisation, les produits chocolatés emballés sont expulsés de la chaîne de production à l'aide d'air comprimé. Cette méthode ne nécessite aucun élément mobile, simplifiant l'opération, et fonctionne suffisamment rapidement pour ne pas avoir à ralentir les alimentations successives. Dans un mode de réalisation, les produits chocolatés emballés soufflés à partir de l'alimentation successive sont collectés, et les produits chocolatés emballés collectés sont enregistrés. Dans un mode de réalisation, l'alimentation successive est arrêtée, de préférence automatiquement, lorsque la buse est activée, mais le produit chocolaté collecté n'est pas enregistré. Dans un mode de réalisation, l'éjection des produits chocolatés emballés en fonction du scannage de la face inférieure des produits chocolatés emballés est automatiquement contrôlée par un programme informatique.

Dans un mode de réalisation, les dimensions des produits chocolatés emballés sont également déterminées à l'aide d'une ou plusieurs caméras, dans lequel les produits chocolatés emballés avec des dimensions incorrectes sont éjectés de l'alimentation successive.

Le scannage de chaque produit chocolaté fournit des informations précieuses sur le processus de production. En détectant et, de préférence, en enregistrant tous les défauts, il est possible d'analyser comment le processus peut être amélioré. Ces données permettent d'identifier les faiblesses dans la production et de prendre des mesures ciblées pour améliorer l'efficacité et la qualité. En outre, cette analyse détaillée des données favorise la conformité et la traçabilité, ce qui est particulièrement important dans l'industrie alimentaire. En indiquant avec précision l'endroit de la chaîne de production où un problème s'est produit et le produit chocolaté concerné, les entreprises peuvent réagir de manière plus rapide et plus efficace aux plaintes ou aux rappels, protégeant ainsi leur réputation et la confiance de leurs clients.

Dans un mode de réalisation, les produits chocolatés sont des barres de chocolat. Souvent, les barres de chocolat sont emballées dans un premier emballage et un deuxième emballage, le premier pouvant être en aluminium et le second en papier. La fermeture de l'emballage situé à la face inférieure de la barre de chocolat permet de vérifier si les deux emballages sont correctement placés. Toutes les informations relatives au produit, telles que la référence de l'emballage, les ingrédients et la date de péremption, se trouvent également du même côté de la barre de chocolat où se trouve la fermeture de l'emballage. Les barres de chocolat doivent toutefois se retrouver dans l'emballage final avec la fermeture tournée vers le bas, de sorte qu'elles sont également transportées dans la chaîne de production avec cette orientation. En scannant la face inférieure de toutes les barres de chocolat à l'aide d'une caméra, il est possible de déterminer si les barres de chocolat sont emballées correctement, si les informations figurant sur l'emballage des barres de chocolat sont correctes et si les barres de chocolat sont emballés correctement. Si une barre de chocolat mal emballée est détectée, des mesures peuvent être prises en temps utile pour éviter qu'elle ne finisse dans le magasin.

Dans un mode de réalisation, le produit chocolaté emballé est soulevé pendant le scannage de la face inférieure. En le soulevant, une caméra peut scanner la face inférieure sans avoir à retourner le produit chocolaté. Les produits chocolatés sont fragiles et donc très délicats. La chaîne de production fonctionnant à grande vitesse, il y a un risque élevé que les produits chocolatés se brisent lorsqu'ils sont retournés.

En soulevant au lieu de retourner les produits, ce problème est évité. Dans un mode de réalisation, les produits chocolatés emballés sont soulevés du convoyeur en aspirant la partie supérieure du produit chocolaté emballé sur un ou plusieurs convoyeurs sous vide. Ensuite, le produit chocolaté emballé aspiré est transporté au-dessus de, et dans le champ de vision d'une ou d'une pluralité de caméras par l'un ou la pluralité de convoyeurs sous vide, pendant que la ou les caméras scannent la face inférieure du produit chocolaté, après quoi le produit chocolaté retombe sur la section suivante du convoyeur. L'aspiration est une méthode très appropriée pour soulever les produits chocolatés, comparé au serrage, car le risque d'endommagement est réduit au minimum. De préférence, l'aspiration et le transport au-dessus d'une ou d'une pluralité de caméras s'effectuent dans un mouvement fluide et à la même vitesse que celle des alimentations successives.

Dans un mode de réalisation, la distance entre les produits chocolatés emballés alimentés de manière successive est réglée avant de scanner la face inférieure des produits chocolatés emballés. Cela permet d'adapter précisément l'alimentation au scannage de la face inférieure des produits chocolatés. La caméra a besoin d'un certain temps pour effectuer un scannage correct, et la distance entre les produits chocolatés successifs doit correspondre à ce temps. Également lorsque les produits sont soulevés, il est important qu'il y ait une certaine distance entre les produits chocolatés successifs afin que le soulèvement puisse être effectué avec des actions rythmiques, minimisant ainsi la complexité du soulèvement. Dans un mode de réalisation, la distance entre les produits chocolatés successifs est réglée en ajustant la vitesse des produits chocolatés successifs pendant un certain temps. Dans un mode de réalisation, l'ajustement de la vitesse d'alimentation des produits chocolatés en fonction de la distance mesurée par le capteur de distance est contrôlé automatiquement par un programme informatique. Dans un mode de réalisation, les produits chocolatés sont acheminés vers le dispositif de levage à une distance d'au moins 20 cm, et de préférence d'au moins 30 cm, et encore plus de préférence d'au moins 40 cm.

Dans un mode de réalisation, les scans de la face inférieure des produits chocolatés emballés sont analysés à l'aide d'un programme informatique qui permet d'identifier des défauts de l'emballage. Dans un mode de réalisation, après détection d'un produit chocolaté mal emballé, le produit chocolaté est automatiquement retiré de l'alimentation successive.

Dans un mode de réalisation, le scannage de la face inférieure des produits chocolatés emballés permet d'examiner les informations sur l'emballage et la façon dont le produit chocolaté est emballé. Le risque de défauts est le plus élevé dans ces deux aspects d'un produit chocolaté emballé, et il est essentiel d'éviter tout défaut précisément dans ces aspects. Dans un mode de réalisation, l'analyse des scans est effectuée par un modèle d'intelligence artificielle (IA) à auto-apprentissage. Un modèle d'IA, basé sur l'apprentissage automatique et l'apprentissage profond, est entraîné avec des scans de produits chocolatés emballés correctement et incorrectement. Le modèle apprend les différences subtiles et les caractéristiques des défauts, tels qu'une mauvaise impression et un emballage endommagé ou incorrect. Alimenté en permanence par de nouveaux scans, le modèle améliore sa détection de défauts en reconnaissant des modèles et en adaptant ses algorithmes. Ce processus d'apprentissage dynamique le rend plus efficace que les systèmes d'inspection statiques. Un avantage important est qu'il permet d'identifier des tendances et des défauts récurrents, ce qui permet de s'attaquer aux causes sous-jacentes.

Dans un deuxième aspect, l'invention se rapporte à un dispositif de détection de produits chocolatés emballés ayant une face supérieure et une face inférieure, tels que, par exemple, des barres de chocolat, comprenant un dispositif de transport, comprenant une pluralité de convoyeurs et adapté pour déplacer successivement des produits chocolatés emballés sur un premier, un deuxième, un troisième et un quatrième segment; un capteur de distance pour mesurer la distance entre des produits chocolatés emballés successifs sur le dispositif de transport, situé dans le premier segment du dispositif de transport; un contrôleur de vitesse adapté pour déplacer les produits chocolatés emballés à une vitesse basée sur la distance mesurée par le capteur de distance, situé dans le deuxième segment du dispositif de transport; une caméra permettant de scanner la face inférieure des produits chocolatés emballés, située dans le troisième segment du dispositif de transport; un dispositif de levage configuré pour soulever les produits chocolatés emballés au-dessus de la caméra, situé dans le troisième segment du dispositif de transport; un dispositif d'éjection pour retirer les produits chocolatés emballés sélectionnés du dispositif de transport, situé dans le quatrième segment du dispositif de transport.

Dans un mode de réalisation, une pluralité de caméras sont utilisées pour scanner la face inférieure des produits chocolatés. Les différentes caméras sont spécialisées pour scanner de différents aspects de la face inférieure des produits chocolatés, permettant d'obtenir des informations plus nombreuses et plus détaillées qu'avec une seule caméra. De préférence, une ou une pluralité de caméras de vision industrielle sont utilisées.

Les produits chocolatés emballés qui sont alimentés successivement passent d'abord devant un capteur de distance qui mesure la distance entre les produits chocolatés emballés successifs. Dans un mode de réalisation, ce capteur de distance est un capteur à ultrasons, un capteur infrarouge, une jauge mécanique, une caméra ou une cellule photoélectrique. À base de la distance mesurée, un régulateur de vitesse ajuste la vitesse des produits chocolatés pendant un court laps de temps, créant ainsi la bonne distance entre les produits chocolatés successifs, et permettant ensuite un scannage clair de la face inférieure des produits chocolatés emballés à l'aide d'une caméra. Si un scan montre qu'un produit chocolaté est emballé de manière incorrecte, ce produit chocolaté est éjecté de l'alimentation successive dans l'éjecteur.

Dans un mode de réalisation, le régulateur de vitesse comprend un ou une pluralité de convoyeurs sous vide, adaptés à l'aspiration des produits chocolatés emballés. La vitesse des convoyeurs sous vide est réglée en fonction de la distance mesurée par le capteur de distance. L'aspiration des produits chocolatés évite qu'ils ne glissent ou ne dérapent lors de l'accélération ou de la décélération. Dans un mode de réalisation, le régulateur de vitesse comprend deux convoyeurs sous vide placés en série. Deux convoyeurs sous vide plus courts ont moins de perte de vide qu'un seul long et permettent un contrôle plus précis de la vitesse en les faisant travailler ensemble de manière indépendante.

Dans un mode de réalisation, le dispositif comprend un ou plusieurs convoyeurs sous vide, suspendus au-dessus d'une ou d'une pluralité de caméras. Ces convoyeurs sous vide sont suspendus à une hauteur qui leur permet d'aspirer fermement la face supérieure des produits chocolatés emballés au fur et à mesure qu'ils sont acheminés, et une fois aspirés, ils déplacent le produit chocolaté emballé au-dessus d'une ou d'une pluralité de caméras, tandis que la ou les caméras effectuent un ou plusieurs scannages de la face inférieure du produit chocolaté emballé. Dans un mode de réalisation, deux convoyeurs sous vide sont suspendus en parallèle. L'utilisation de deux convoyeurs sous vide parallèles au lieu d'un seul convoyeur sous vide permet d'utiliser des convoyeurs sous vide plus étroites sans compromettre la force de levage. Les convoyeurs sous vide plus étroits ont moins de pertes de vide, ce qui permet au dispositif de levage de fonctionner plus efficacement. Dans un mode de réalisation, les convoyeurs sous vide déplacent les produits chocolatés emballés sur une distance d'au moins 10 cm, de préférence d'au moins 25 cm, et de préférence encore d'au moins 40 cm. À cette distance, la ou les caméras disposent de suffisamment de temps et d'un champ de vision suffisamment large pour scanner clairement la face inférieure des produits chocolatés emballés.

Dans un mode de réalisation, le dispositif d'éjection comprend une buse apte à souffler de l'air comprimé avec une force suffisante pour souffler un produit chocolaté emballé à partir des alimentations successives, et un bac de récupération apte à récupérer les produits chocolatés emballés soufflés à partir des alimentations successives. Dans un mode de réalisation, le bac de récupération comprend un capteur qui enregistre les produits chocolatés emballés soufflés à partir des alimentations successives. Cela permet de vérifier si un produit emballé a été retiré des alimentations successives lorsque la buse est activée.

Dans ce qui suit, l'invention sera décrite au moyen d'exemples non-limitatifs illustrant l'invention, et qui ne sont pas destinés à limiter ou ne peuvent pas être interprétés comme limitant l'étendue de l'invention.

### EXEMPLES

Un produit chocolaté emballé dans lequel des défauts de l'emballage peuvent potentiellement être détectés à l'aide d'un dispositif et selon une méthode décrite dans les revendications est une barre de chocolat (15).

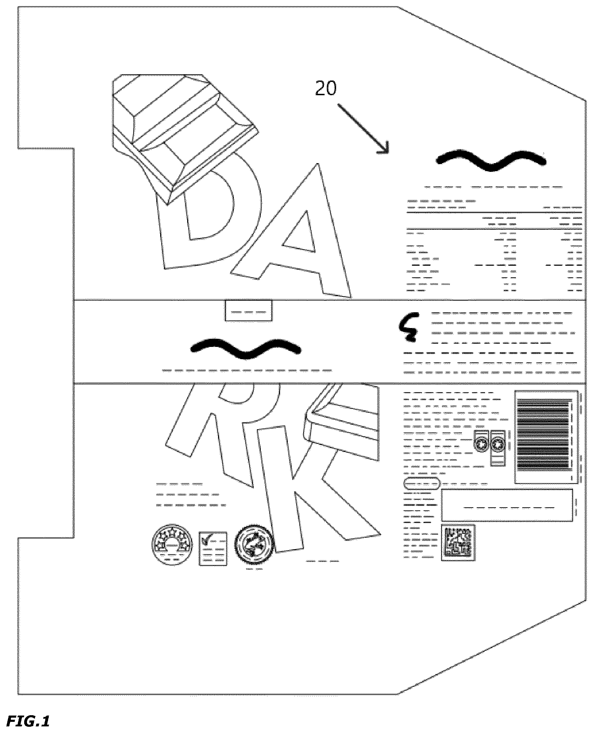

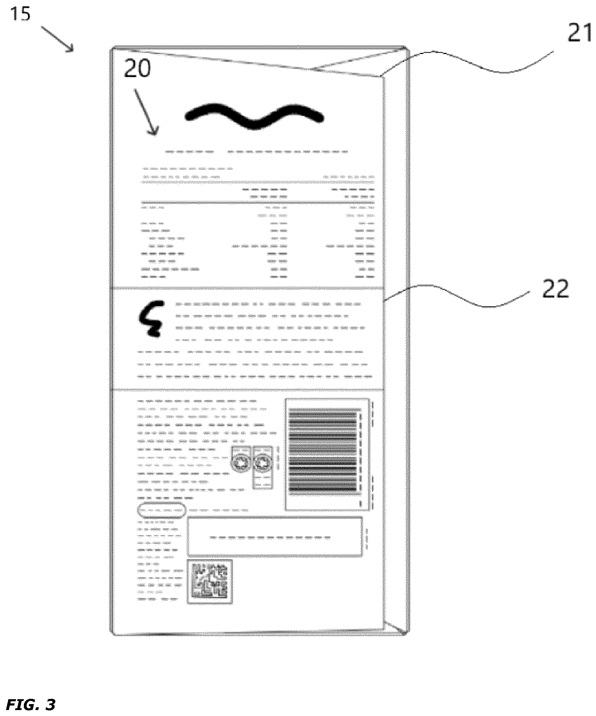

La FIG. 1 illustre un emballage destiné à être emballé autour d'une barre de chocolat (15), avec, imprimées sur le côté droit de l'emballage, des informations sur le produit (20) à contrôler. Lorsque la barre de chocolat (15) est emballée, ces informations sur le produit (20) se trouvent sur la face inférieure de la barre de chocolat (15), comme l'illustre la FIG. 3. Le reste des informations sur l'emballage se trouve sur la face supérieure de la barre de chocolat (15), comme on peut le voir en comparant la FIG. 1 et la FIG. 3. Outre le contrôle de l'exactitude des informations relatives au produit (20), il est également vérifié si la barre de chocolat (15) est correctement emballée. Cela est reconnaissable à la fermeture située au bas de la barre de chocolat (15). A cet effet, les côtés de la fermeture (21) et les coins de la fermeture (22) sont contrôlés, par exemple. L'absence de plis ou de déchirures est également contrôlée. En outre, les reflets de la lumière sur la face inférieure peuvent indiquer que la barre de chocolat est déformée ou endommagée.

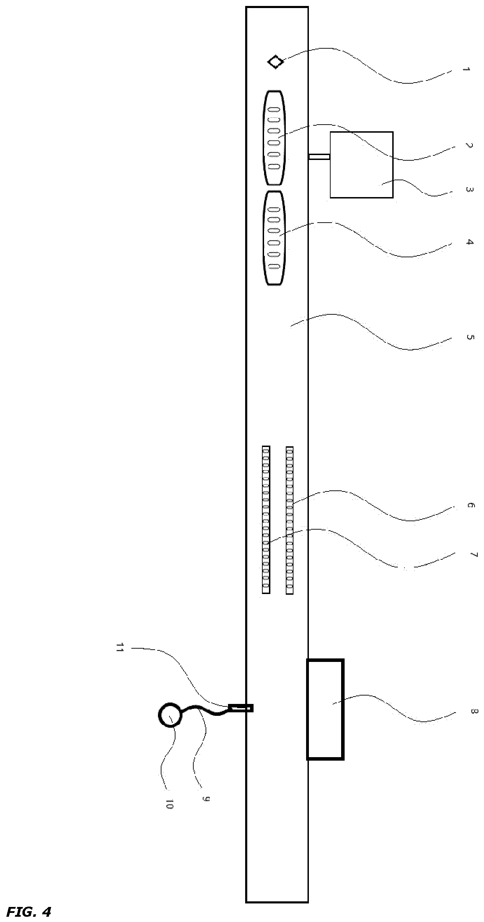

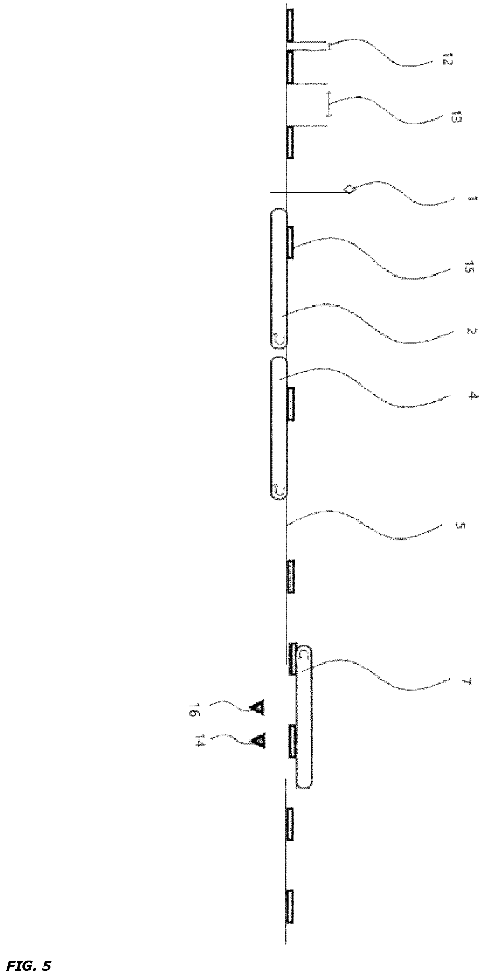

Les FIG. 4 et la FIG. 5 illustrent respectivement une vue de dessus et une vue latérale du dispositif utilisé pour détecter si les barres de chocolat (15) sont correctement emballées. Après la production et l'emballage des barres de chocolat (15), celles-ci sont introduites successivement sur un convoyeur (5), les barres de chocolat (15) reposant avec leur face inférieure sur le convoyeur (5) à des distances variables les unes des autres (12, 13). Avant que la face inférieure des barres de chocolat (15) puisse être scannée, les barres de chocolat (15) doivent être acheminées consécutivement au dispositif de levage à intervalles réguliers. Pour réaliser cette distance régulière, la distance entre les barres de chocolat (15) est d'abord mesurée à l'aide d'une cellule photoélectrique (1). Les barres de chocolat (15) sont ensuite aspirées à un premier convoyeur sous vide (2) et à un second convoyeur sous vide (4), dont la force d'aspiration est générée par une pompe à vide (3). En fonction de la distance mesurée par la cellule photoélectrique (1), la vitesse de transport des deux convoyeurs sous vide (2,4) est réglée de manière à ce que les barres de chocolat (15) soient acheminées vers le dispositif de levage à égale distance l'une de l'autre. Ce dispositif de levage consiste en deux convoyeurs sous vide (6,7), suspendues en parallèle au-dessus du convoyeur (5), qui aspirent les barres de chocolat (15) et les soulèvent au-dessus d'une ouverture dans le convoyeur (5). Sous cette ouverture, deux caméras de vision industrielle (14,16) sont positionnées pour scanner la face inférieure des barres de chocolat (15). des exemples d'aspects pouvant être vérifiés : codes-barres, date de péremption, numéros de produits, dimensions, poids indiqué, ingrédients, film visible de l'emballage intérieur, coins pliés à la fermeture de l'emballage, rides, déchirures, fermeture fissurée ou parties déformées. Les deux caméras ont chacune une configuration distincte spécialisée dans la détection de défauts dans des aspects spécifiques de la face inférieure d'une barre de chocolat (15).

Le réglage de la distance correcte entre les barres de chocolat (15) permet d'éviter que deux barres de chocolat (15) n'entrent en même temps dans le champ de vision des caméras (14, 16), ce qui entraînerait des incohérences dans les données de scannage. La vitesse à laquelle les barres de chocolat (15) sont transportées au-dessus des caméras (14,16) est optimisée de manière à ce que la détection soit la plus rapide possible et que la qualité du scannage soit suffisamment correcte pour déterminer les défauts avec précision et exactitude. Les images prises par les caméras sont envoyées à un ordinateur où elles sont analysées par un modèle d'intelligence artificielle.

À la fin des convoyeurs sous vide (6,7), les barres de chocolat (15) se détachent à nouveau et sont récupérées par un convoyeur (5) qui achemine les barres de chocolat scannées (15) vers le dispositif d'éjection. Le dispositif d'éjection comprend une source d'air comprimé (10) qui fournit de l'air comprimé à une buse (11) par l'intermédiaire d'un tuyau (9). Si le modèle d'IA a détecté une barre de chocolat mal emballée (15), un signal est envoyé à la buse (11) qui active la buse (11) lorsque la barre de chocolat mal emballée arrive à la buse (11). Le souffle d'air de la buse (11) fait tomber la barre de chocolat du convoyeur (5) et la recueille dans un bac de récupération (8). Le bac de récupération (8) est doté d'un capteur dans l'ouverture par laquelle il reçoit la barre de chocolat (15) qui enregistre si une barre de chocolat (15) a été récupérée lorsque la buse (11) est activée. Ce capteur est, par exemple, un capteur de poids ou un capteur de lumière. Si le capteur n'enregistre pas de barre de chocolat (15) alors que la buse (11) est activée, la chaîne de production est automatiquement arrêtée.

## Revendications

1. Une méthode de détection en ligne de défauts dans des produits chocolatés emballés (15), comprenant les étapes suivantes
- la fabrication d'un produit chocolaté dans un moule;
- le démoulage du produit chocolaté fabriqué;
- l'emballage du produit chocolaté fabriqué, le produit chocolaté emballé comprenant une face supérieure et une face inférieure;
- le scannage en ligne de la face inférieure du produit chocolaté emballé à l'aide d'une ou d'une pluralité de caméras (14, 16);
- la séparation en ligne des produits chocolatés correctement emballés et des produits chocolatés incorrectement emballés, les produits chocolatés correctement emballés et les produits chocolatés incorrectement emballés étant identifiés sur la base du scannage de la face inférieure du produit chocolaté emballé;
- la livraison des produits chocolatés correctement emballés à l'emballage final;
- l'alimentation successive des produits chocolatés emballés sur un convoyeur (5), jusqu'à, et au-delà d'un endroit où la face inférieure des produits chocolatés emballés est scannée et un endroit où les produits chocolatés correctement emballés et les produits chocolatés incorrectement emballés sont séparés,
et dans lequel le convoyeur comprend une interruption résultant en un segment ouvert ayant d'un côté la partie d'alimentation du convoyeur et d'un côté la partie suivante du convoyeur, **caractérisé en ce que** le segment est ponté par une ou une pluralité de convoyeurs sous vide (6, 7) suspendues par le haut, la méthode en outre comprenant les étapes du soulèvement du produit chocolaté emballé par le haut dans la partie d'alimentation du convoyeur en aspirant la partie supérieure du produit chocolaté emballé sur le convoyeur sous vide, du transport du produit chocolaté emballé aspiré avec le convoyeur sous vide au-dessus et dans le champ de vision d'une ou d'une pluralité de caméras, et du remplacement du produit chocolaté sur la partie suivante du convoyeur, ces étapes se déroulant à la même vitesse que le reste de la chaîne de production.

2. La méthode selon la revendication 1, dans laquelle les produits chocolatés sont des barres de chocolat.

3. La méthode selon l'une des revendications précédentes, comprenant en outre l'étape consistant à scanner la totalité de la face inférieure des produits chocolatés.

4. La méthode selon l'une des revendications précédentes, comprenant en outre l'étape consistant à contrôler une distance (12, 13) entre des produits chocolatés emballés successifs pendant l'alimentation des produits chocolatés emballés à l'endroit où la face inférieure des produits chocolatés emballés est scannée.

5. La méthode selon la revendication 4, comprenant en outre l'étape consistant à contrôler la distance entre les produits chocolatés emballés successifs en mesurant une distance entre les produits chocolatés emballés successifs et, à base de la distance mesurée, en ajustant la vitesse d'alimentation des produits chocolatés emballés successifs pendant une période prédéterminée.

6. La méthode selon l'une des revendications précédentes, comprenant en outre l'étape consistant à déterminer les informations sur l'emballage d'un produit chocolaté et la manière dont le produit chocolaté est emballé, à l'aide d'un scan de la face inférieure du produit chocolaté emballé, et à identifier un produit chocolaté correctement emballé et un produit chocolaté incorrectement emballé sur la base de cette détermination.

7. La méthode selon l'une des revendications précédentes, comprenant en outre l'étape consistant à utiliser un modèle d'intelligence artificielle à auto-apprentissage pour identifier les produits chocolatés mal emballés à base du scannage de la face inférieure des produits chocolatés emballés.

8. La méthode selon l'une des revendications précédentes, comprenant en outre l'étape consistant à séparer les produits chocolatés correctement emballés des produits chocolatés incorrectement emballés en éjectant les produits chocolatés incorrectement emballés de l'alimentation successsive.

9. La méthode selon la revendication 8, comprenant en outre l'étape consistant à Ejecter les produits chocolatés emballés incorrectement de l'alimentation successive à l'aide d'air comprimé.

10. Un dispositif de détection de produits chocolatés emballés (15) ayant une face supérieure et une face inférieure, comprenant
- un dispositif de transport comprenant une pluralité de convoyeurs (5) et permettant de déplacer successivement des produits chocolatés emballés sur un premier, un deuxième, un troisième et un quatrième segment;
- un capteur de distance pour mesurer la distance (12, 13) entre les produits chocolatés emballés successifs sur le convoyeur, situé dans le premier segment du dispositif de transport;
- un régulateur de vitesse permettant de déplacer les produits chocolatés emballés à une vitesse basée sur la distance mesurée par le capteur de distance, situé dans le second segment du dispositif de transport;
- une ou une pluralité de caméras (14, 16) pour scanner la face inférieure des produits chocolatés emballés, situées dans le troisième segment du dispositif de transport;
- un ou une pluralité de convoyeurs sous vide (6, 7) configurés pour aspirer et transporter les produits chocolatés emballés au-dessus d'une ou d'une pluralité de caméras situées dans le troisième segment du dispositif de transport;
- un dispositif d'éjection pour retirer les produits chocolatés emballés sélectionnés du dispositif de transport, situé dans le quatrième segment du dispositif de transport.

11. Le dispositif selon la revendication 10, dans lequel le régulateur de vitesse comprend un ou une pluralité de convoyeurs sous vide, adaptés à l'aspiration par la face inférieure des produits chocolatés emballés.

12. Le dispositif selon la revendication 10 ou 11, dans lequel le dispositif comprend deux convoyeurs sous vide suspendus en parallèle au-dessus d'une ou d'une pluralités de caméras.

13. Le dispositif selon la revendication 12, dans lequel les deux convoyeurs sous vide sont étendus sur une longueur d'au moins 10 cm.
